(19) Europäisches Patentamt
European Patent Office
Office européen des brevets

(11) **EP 2 779 356 B1**

(12) **EUROPEAN PATENT SPECIFICATION**

(45) Date of publication and mention
of the grant of the patent:
**01.02.2017 Bulletin 2017/05**

(21) Application number: **14157986.2**

(22) Date of filing: **06.03.2014**

(51) Int Cl.:
*H02J 7/00* (2006.01)     *H02J 7/04* (2006.01)

(54) **Battery pack, charging circuit, and charging device**

Batteriepack, Ladeschaltung und Ladevorrichtung

Bloc de batterie, circuit de charge et dispositif de charge

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2013 JP 2013049628**

(43) Date of publication of application:
**17.09.2014 Bulletin 2014/38**

(73) Proprietor: **Panasonic Intellectual Property
Management Co., Ltd.
Osaka 540-6207 (JP)**

(72) Inventors:
• **Kawai, Akira**
  **Chuo-ku, Osaka 540-6207 (JP)**
• **Ikeda, Masaki**
  **Chuo-ku, Osaka 540-6207 (JP)**
• **Sakaue, Masaaki**
  **Chuo-ku, Osaka 540-6207 (JP)**

(74) Representative: **Appelt, Christian W.
Boehmert & Boehmert
Anwaltspartnerschaft mbB
Patentanwälte Rechtsanwälte
Pettenkoferstrasse 20-22
80336 München (DE)**

(56) References cited:
**EP-A2- 0 915 552     EP-A2- 1 251 618
EP-A2- 2 568 569     WO-A2-91/00623
US-A1- 2009 197 152     US-A1- 2012 249 087**

**Description**

The present invention relates to a chargeable battery, a charging circuit for charging the battery pack, and a charging device including the charging circuit.

When a battery pack is overcharged or over-discharged, deterioration of the electrodes in the battery pack increases the internal resistance. When using an overcharged or over-discharged battery pack, the increase in internal resistance may overheat the battery back. Overheating of the battery pack may raise the internal pressure of the battery pack and activate a safety valve. This would result in the outflow of electrolyte solution from the safety valve. To avoid such a situation, a charger includes a charging circuit that limits overcharging. An electric instrument using the battery pack includes a protection circuit that limits over-discharging of the battery pack.

JP 2007-143279 A describes an example of a charging circuit that gradually increases the current supplied to the battery pack. When the charge current reaches a first threshold, the charging circuit sets the current supplied to the battery pack to a predetermined fixed value. Then, when the inter-terminal voltage of the battery pack reaches a second threshold, the charging circuit supplies the battery pack with current at a constant voltage. This limits overcharging of the battery pack.

The protection circuit in the electric instrument detects the inter-terminal voltage of the battery pack. When the inter-terminal voltage of the battery pack becomes equal to or less than a lower limit voltage, the protection circuit interrupts the power supplied from the battery pack to the electric instrument.

During use of the conventional battery pack, the battery pack may become over-discharged. For example, when the battery pack is left attached to an electric instrument for a relatively long period of time, small currents are continuously discharged from the battery pack. This would over-discharge the battery pack.

Further, the outer appearance does not allow an over-discharged battery pack to be distinguished from a battery pack that is not over-discharged. As a result, a user may charge a battery pack that has been over-discharged.

Document US 2009/0197152 A1 discloses a method and system for battery protection. A battery pack being interfaced with a power tool includes a housing, a cell, a controller, and a circuit. The circuit enables the controller to operate when the voltage supplied by the cell to the controller is below an operating voltage threshold of the controller.

Document EP 2 568 569 A2 discloses a charger including an output circuit unit to output a charging current to a secondary battery, a voltage detection unit to detect a voltage of the secondary battery, and a control unit to control the output circuit unit, whereby constant current charging and constant voltage charging are performed. The control unit decreases a constant current value of the charging current by stages during the constant current charging and determines that the secondary battery has deteriorated by using a first voltage drop value of the secondary battery occurring upon first conversion and a second voltage drop value of the secondary battery occurring upon second conversion.

Document WO 91/00623 A2 discloses a battery charging system including a battery of one chemistry type and a battery charger for a different battery type. If a batter over-discharge condition or if an electrochemical cell imbalance is detected within the battery, the batter prevents charging by the battery charger by means of a resettable switch.

Document US 2012/0249087 A1 discloses a battery protection circuit for protecting a secondary battery composed of a first cell and a second cell, including a reference voltage supply circuit that outputs a first reference voltage and a second reference voltage generated based on cell voltages of the first cell and the second cell, respectively. A first detection circuit outputs a signal prohibiting charging when one of the cell voltages of the first cell and the second cell exceeds a predetermined overcharge indication value. A second detection circuit outputs a signal prohibiting charging when at least one of the first reference voltage and the second reference voltage is not within a predetermined target range. A control circuit controls to prohibit charging when one of the outputs from the first detection circuit and the second detection circuit is the signal prohibiting charging.

It is an object of the present invention to provide a system comprising a variety of battery packs and a charging device, that allows for determination of an over-discharged battery pack.

The present invention is defined in the independent claim. Preferred embodiments are addressed in the dependent claims.

Each aspect of the present disclosure allows for determination of an over-discharged battery pack. Further, the charging circuit and the charging device obviates or reduces the charging of an over-discharged battery pack.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory and are not restrictive of the invention, as claimed.

The invention, together with objects and advantages thereof, may best be understood by reference to the following description of the presently preferred embodiments together with the accompanying drawings in which:

Fig. 1 is a block diagram of a battery pack and a charging device in a first embodiment;

Fig. 2 is a flowchart showing the procedures of a charging commencement process executed by the charging device of the first embodiment;

Fig. 3 is a chart illustrating the relationship of lower limit voltages of various battery packs and a lower limit value serving as a determination reference voltage;

Fig. 4 is a chart illustrating the relationship of lower limit voltages of various battery packs and a lower limit value serving as a determination reference voltage;

Fig. 5 is a block diagram of a battery pack and a charging device in a second embodiment;

Fig. 6 is a flowchart showing the procedures of a charging commencement process executed by the charging device of the second embodiment;

Fig. 7 is a graph showing the relationship of the charging frequency and the internal resistance of the battery pack;

Fig. 8 is a graph showing the relationship of the charging frequency and the lower limit voltage that has been corrected by the usage frequency;

Fig. 9 is a flowchart showing the procedures of a charging commencement process executed by the charging device of a third embodiment;

Fig. 10 is a block diagram of a battery pack and a charging device in a fourth embodiment;

Fig. 11 is a graph showing the relationship of the battery temperature and the internal resistance of the battery pack;

Fig. 12 is a graph showing the relationship of the battery temperature and a temperature-corrected lower limit voltage; and

Fig. 13 is a flowchart showing the procedures of a charging commencement process executed by the charging device of the fourth embodiment.

First Embodiment

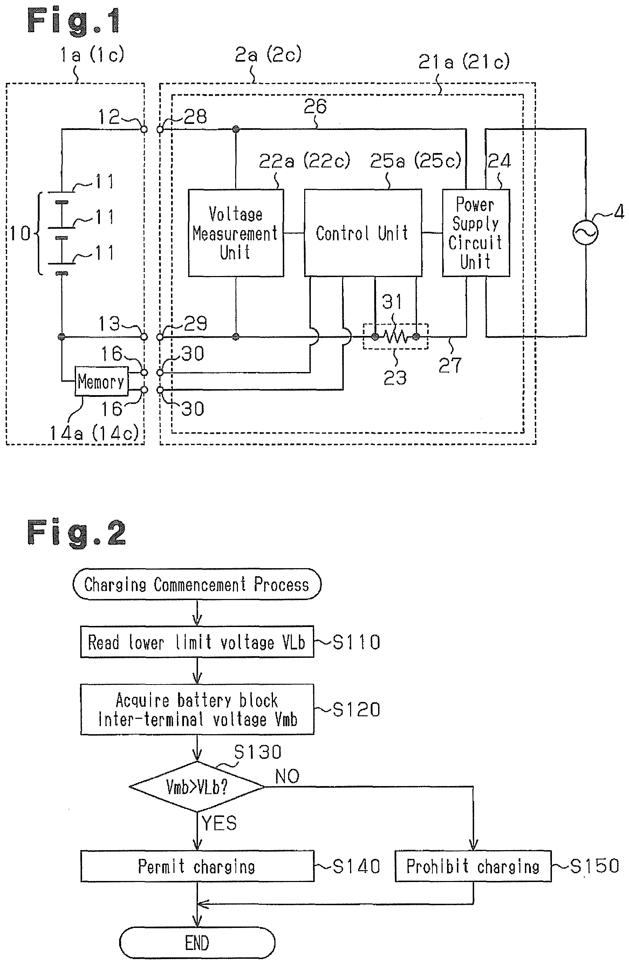

A battery pack 1a and a charging device 2a of a first embodiment will now be described with reference to Fig. 1.

The battery pack 1a includes a battery block 10, which is formed by a plurality of battery cells 11, and a memory 14a. A case accommodates the battery block 10 and the memory 14a. Lithiumion cells, lithium cells, nickel-metal hydride cells, nickel-cadmium cells, and the like may be used as the battery cells 11.

The battery cells 11 are connected in series. A positive electrode 12 is located at the positive side of the battery block 10. A negative electrode 13 is located at the negative side of the battery block 10. The negative electrode 13 is connected to the memory 14a.

The memory 14a stores a battery block lower limit voltage VLb. The battery block lower limit voltage VLb indicates the lower limit value of an inter-terminal voltage range in which discharging is permitted when the battery pack 1a is in an initial condition (lower limit value when the temperature of the battery pack 1a is 25°C). For example, when the battery pack 1 a is in the initial condition, the battery pack 1a may be used until the inter-terminal voltage Vmb of the battery block 10 falls to the battery block lower limit voltage VLb. The initial condition refers to a condition in which the battery pack 1a has not been used yet after being attached to an electric instrument. The battery block lower limit voltage VLb is one example of the battery information. The battery block lower limit voltage VLb is a value set for each model of the battery block 10. The model of a battery block 10 is set in accordance with the battery characteristics of the battery cells 11 and the quantity of the battery cells 11. The battery block lower limit voltage VLb is one item allowing for classification of the battery block 10. The battery cells 11 may each have different battery characteristics. Thus, a different battery block lower limit voltage VLb is set for each battery block 10.

The memory 14a includes a storage medium, which may be a rewritable semiconductor memory device such as an electrically erasable programmable read only memory (EEPROM). The battery pack 1a includes communication terminals 16 coupled to the memory 14a to enable reading and writing the battery information.

The charging device 2a is used with the battery pack 1a and is configured to charge the battery pack 1a. The charging device 2a includes a charging circuit 21a, which is accommodated in a housing. The charging circuit 21a includes a voltage measurement unit 22a, a current measurement unit 23, a power supply circuit unit 24 that generates power supplied to the battery pack 1 a, and a control unit 25a that controls the charging of the battery pack 1 a.

The power supply circuit unit 24 includes a converter that converts alternating current (AC), which is received from an external AC power supply 4, to direct current (DC). The direct current is supplied through a DC line to the battery pack 1a. A positive side wire 26 of the DC line is connected to a positive terminal 28. A negative side wire 27 of the DC line is connected to a negative terminal 29. The positive terminal 28 is connected to the positive electrode 12 of the battery pack 1a, and the negative terminal 29 is connected to the negative electrode 13 of the battery pack 1 a.

The voltage measurement unit 22a measures the voltage between the positive terminal 28 and the negative terminal 29 (e.g., inter-terminal voltage Vmb of battery block 10). The inter-terminal voltage Vmb related to the measurement is output to the control unit 25a.

The current measurement unit 23 is used to measure the charge current Ic supplied to the battery pack 1a.

The current measurement unit 23 includes a resistor 31, which is located on the negative side wire 27 of the DC line. The potential difference between the two terminals of the resistor 31 is measured to obtain the charging current Ic.

The control unit 25a transmits a control signal to the power supply circuit unit 24 to control modes for supplying direct current, voltage, and power to the battery pack 1 a. The control is executed from when the charging starts to when the charging ends. The power supply mode is set so that power is supplied under a constant current or under a constant voltage. Such control is executed to obviate or reduce rapid charging or overcharging of the battery pack 1a.

The control unit 25a reads battery information from the memory 14a of the battery pack 1a or writes new battery information to the memory 14a. The control unit 25a includes two communication terminals 30, which are used for communication with the memory 14a of the battery pack 1 a. When the battery pack 1 a is attached to the charging device 2a, the communication terminals 30 contact the communication terminals 16 of the battery pack 1 a. When charging prohibition conditions are satisfied (step S130), the control unit 25a transmits a control signal to the power supply circuit unit 24 and stops the charging of the battery pack 1 a. More specifically, the voltage of the direct current generated by the power supply circuit unit 24 is set to substantially zero (0) to prohibit the charging of the battery pack 1 a.

The procedures of a charging commencement process executed by the control unit 25a will now be described with reference to Fig. 2.

When the battery pack 1a is attached to the charging device 2a, the control unit 25a executes the charging commencement process. The charging commencement process determines whether or not the battery pack 1 a, which is the subject of charging, is over-discharged. When the battery pack 1a is over-discharged, the control unit 25a prohibits charging of the battery pack 1a. In step S110, the control unit 25a reads the battery block lower limit voltage VLb from the memory 14a of the battery pack 1a. In step S120, the control unit 25a acquires the inter-terminal voltage Vmb of the battery block 10 that is measured by the voltage measurement unit 22a.

In step S130, the control unit 25a determines whether or not the inter-terminal voltage Vmb is higher than the battery block lower limit voltage VLb. When the inter-terminal voltage Vmb is higher than the battery block lower limit voltage VLb (YES), the control unit 25a proceeds to step S140 and permits charging. This starts the charging.

When determined in step S130 that the inter-terminal voltage Vmb is less than or equal to the battery block lower limit voltage VLb (NO), the control unit 25a determines that the battery pack 1a is over-discharged and proceeds to step S150 to prohibit the charging.

The background for employing such a charging commencement process will now be described. The battery pack 1 a is used in a power tool such as a power drill. A variety of battery packs having different electrical characteristics (e.g., battery block lower limit voltage VLb) may be used as the battery pack 1a. To improve convenience for the user, the battery packs are compatible with one another so that they can be used for the power tool. This allows for the use of, for example, a new battery pack of which the battery cells 11 have undergone an improvement to extend the usage time for each charging.

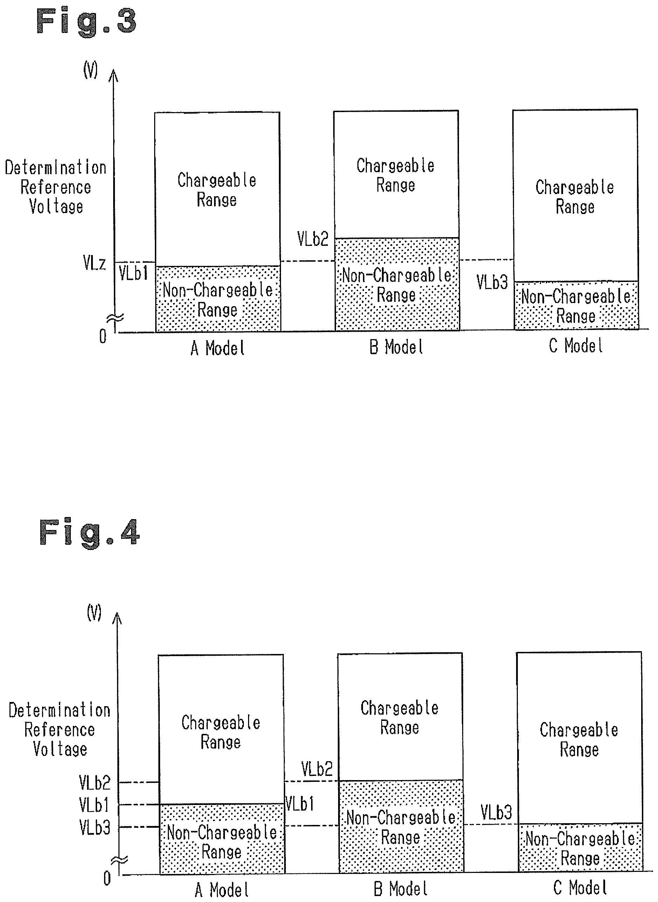

If the same over-discharging determination reference voltage were to be used for different models of battery packs, over-discharging may not be correctly determined. This problem will now be described with reference to Fig. 3.

In the example shown in Fig. 3, an A model battery pack, a B model battery pack, and a C model battery pack have lower limit voltages VLb1, VLb2, and VLb3, respectively. The lower limit voltage VLb2 of the B model battery pack is higher than the lower limit voltage VLb1 of the A model battery pack. The lower limit voltage VLb3 of the C model battery pack is lower than the lower limit voltages VLb1 and VLb2 of the A model and B model battery packs. The same over-discharging determination reference voltage VLz is used for the different models (A, B, and C) battery packs. The average value of the lower limit voltages VLb of the three models of battery packs is used as the over-discharging determination reference voltage VLz.

For example, when the inter-terminal voltage Vmb of the battery block 10 in the B model battery pack is between the over-discharging determination reference voltage VLz and the lower limit voltage VLb2, the B model battery pack is determined as being chargeable. However, the inter-terminal voltage Vmb is actually lower than or equal to the lower limit voltage VLb2 and included in a non-chargeable range. Thus, charging should be prohibited in the B model battery pack. When the inter-terminal voltage Vmb of the battery block 10 in the C model battery pack is between the lower limit voltage VLb3 and the over-discharging determination reference voltage VLz, the C model battery pack is determined as being non-chargeable. However, the inter-terminal voltage Vmb is actually higher than the lower limit voltage VLb3 and included in a chargeable range. Thus, charging should be permitted in the C model battery pack.

In the A model battery pack, the determination reference voltage VLz is substantially equal to the lower limit voltage VLb1. Thus, over-discharging may be correctly determined. As for the B and C model battery packs, over-discharging may not be correctly determined.

In this respect, the first embodiment uses the lower limit voltage VLb set for each model of battery pack as the over-discharging determination reference voltage of the battery pack 1 a (refer to step S130 in the charging commencement process of Fig. 2).

The operations of the battery pack 1 a and the charging device 2a in the first embodiment will now be described with reference to Fig. 4.

As shown in Fig. 4, the A, B, and C model battery packs 1a store the lower limit voltages VLb1, VLb2, and VLb3, respectively. When determining over-discharging in the A model battery pack 1a, the charging device 2a uses the lower limit voltage VLb1 stored in the battery pack 1a as the over-discharging determination reference voltage. The charging device 2a compares the lower limit voltage VLb1 with the inter-terminal voltage Vmb of the battery block 10.

In the same manner, when determining over-discharging in the B model battery pack 1a, the charging device 2a uses the lower limit voltage VLb2 stored in the battery pack 1a as the over-discharging determination reference voltage. The charging device 2a compares the lower limit voltage VLb2 with the inter-terminal voltage Vmb of the battery block 10.

When determining over-discharging in the C model battery pack 1a, the charging device 2a uses the lower limit voltage VLb3 stored in the battery pack 1a as the over-discharging determination reference voltage. The charging device 2a compares the lower limit voltage VLb3 with the inter-terminal voltage Vmb of the battery block 10.

In this manner, when the charging device 2a determines whether or not the battery pack 1a is over-discharged, the lower limit voltage VLb set for each battery block 10 is used as the determination reference voltage. Thus, over-discharging is correctly determined. This obviates or reduces charging of the battery pack 1a that is over-discharged.

The advantages of the first embodiment will now be described.

(1) The battery pack 1a of the first embodiment includes the memory 14a that stores the battery block lower limit voltage VLb set for each model of the battery block 10. This allows for the lower limit voltage VLb that differs between each model of the battery block 10 to be used as the determination reference voltage, which is used to determine whether or not the battery pack 1a is over-discharged. As a result, over-discharging of the battery pack 1a may be correctly determined.

For example, the charging device 2a may determine over-discharging of the battery pack 1 a (step S130). The over-discharging determination may be performed by a device other than the charging device 2a. For example, the electric instrument to which the battery pack 1a is attached may determine over-discharging of the battery pack 1a. Alternatively, a tester may be used to determine over-discharging of the battery pack 1a.

(2) The charging circuit 21 a of the first embodiment includes the voltage measurement unit 22a, which measures the inter-terminal voltage Vmb of the battery block 10, and the control unit 25a, which compares the inter-terminal voltage Vmb and the battery block lower limit voltage VLb. The control unit 25a permits charging when the inter-terminal voltage Vmb is higher than the lower limit voltage VLb and prohibits charging when the inter-terminal voltage Vmb is less than or equal to the lower limit voltage VLb. This obviates or reduces charging of the over-discharged battery pack 1 a.

(3) The charging device 2a of the first embodiment includes the charging circuit 21 a. For example, the charging device 2a reads the lower limit voltage VLb set for each model of the battery block 10. Then, based on the lower limit voltage VLb, the charging device 2a prevents or reduces charging of the battery pack 1a that is over-discharged.

Second Embodiment

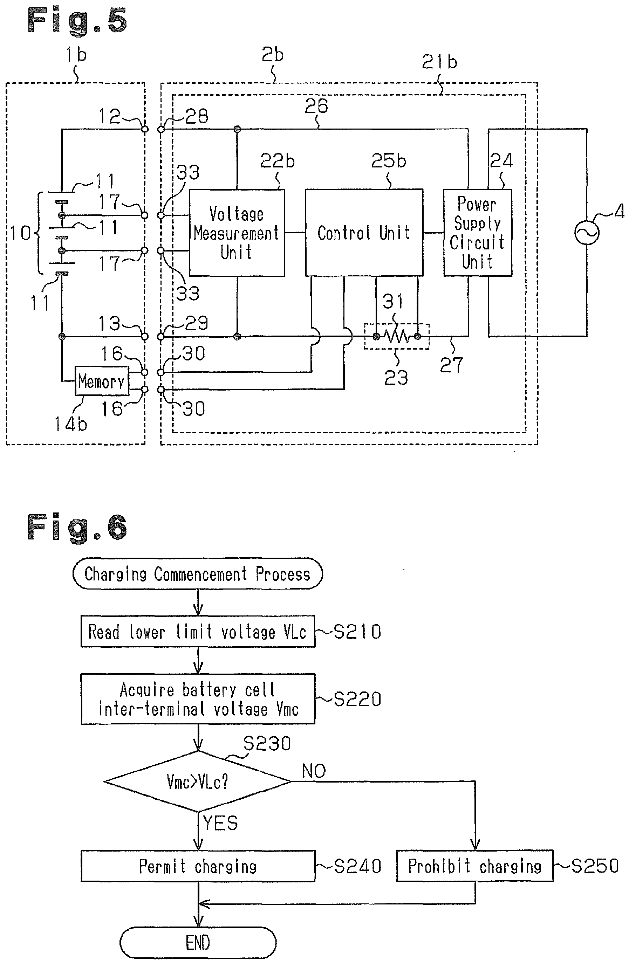

A second embodiment will now be described with reference to Fig. 5.

The second embodiment differs from the first embodiment in a battery pack 1 b, a charging circuit 21b, and a charging device 2b.

The battery pack 1b includes voltage measurement terminals 17, which are connected to between the battery cells 11. The terminals 17 are used to measure the inter-terminal voltages Vmc of the battery cells 11. In the illustrated embodiment of Fig. 5, three inter-terminal voltages Vmc of three battery cells 11 may be measured using the terminals 17 and the electrodes 12 and 13. Otherwise, the configuration of the battery pack 1 b is the same as that of the first embodiment. Like or same reference numerals are given to those components that are the same as the corresponding components of the first embodiment. Such components will not be described.

A voltage measurement unit 22b replaces the voltage measurement unit 22a in the charging device 2a of the first embodiment. The voltage measurement unit 22a measures the inter-terminal voltage Vmc of each battery cell 11. Terminals 33 are connected to the voltage measurement unit 22b. When charging the battery pack 1 b, the terminals 33 are connected to the voltage measurement terminals 17 of the battery pack 1 b.

Instead of the charging commencement process of the first embodiment, a control unit 25b performs the charging commencement process that will be described below.

The procedures of the charging commencement process executed by the control unit 25b will now be described.

In step S210, the control unit 25b reads a battery cell lower limit voltage VLc from a memory 14b of the battery pack 1 b.

The battery cell lower limit voltage VLc indicates the lower limit value of an inter-terminal voltage range in which discharging is permitted when the battery pack 1b is in an initial condition (lower limit value when the temperature of the battery pack 1 b is 25°C). For example, when the battery pack 1 b is in an initial condition, the battery pack 1 b is usable until the inter-terminal voltage Vmc of one battery cell 11 reaches the battery cell lower limit voltage VLc.

In step S220, the control unit 25b obtains the inter-terminal voltage Vmc of each battery cell 11. In step S230, the control unit 25b determines whether or not each inter-terminal voltage Vmc is higher than the battery cell lower limit voltage VLc. When determining that each inter-terminal voltage Vmc is higher than the battery cell lower limit voltage VLc (YES), the control unit 25b proceeds to step S240 and permits charging. This starts the charging.

When determining in step S230 that at least one inter-terminal voltage Vmc is lower than or equal to the battery cell lower limit voltage VLc (NO), the control unit 25b determines that the battery pack 1b is over-discharged and proceeds to step S250 to prohibit charging.

The changes from the first embodiment result in the operations that will now be described.

In the first embodiment, the inter-terminal voltage Vmb of the battery block 10 is measured and compared with the battery block lower limit voltage VLb to determine over-discharging of the battery pack 1 b. Such a determination is effective when an increase in the internal resistance during usage equally occurs in each battery cell 11.

However, when the battery pack 1 b is used over a long period of time, variations in the electrical characteristics between the battery cells 11 cannot be ignored. In such a case, variations in the internal resistances of the battery cells 11 result in variations in the discharge voltages of the battery cells 11. Thus, the inter-terminal voltage of one or more of the battery cells 11 in the battery block 10 may be lower than that of the other battery cells 11. As a result, some of the battery cells 11 in the battery block 10 may be over-discharged.

Accordingly, in the second embodiment, over-discharging is determined for each battery cell 11. When a battery cell 11 that is over-discharged is located, charging is prohibited. This obviates or reduces charging of the over-discharged battery cell 11.

The second embodiment has the advantages described below.

(1) The battery pack 1 b of the second embodiment includes the memory 14b that stores the battery cell lower limit value VLc set in accordance with the model of the battery cells 11. Thus, when determining whether or not the battery pack 1 b is over-discharged, the battery cell lower limit voltage VLc that differs between the battery cells 11 may be used. This allows for correct determination of whether or not the battery pack 1 b is over-discharged.

(2) The charging circuit 21 b of the second embodiment includes the voltage measurement unit 22b, which measures the inter-terminal voltage of each battery cell 11, and the control unit 25b, which compares each inter-terminal voltage Vmc and the battery cell lower limit voltage VLc. When each inter-terminal voltage Vmc is higher than the battery cell lower limit voltage VLc, the control unit 25b permits charging. When at least one inter-terminal voltage Vmc is lower than or equal to the battery cell lower limit voltage VLc, the control unit 25b prohibits charging. This obviates or reduces charging of the battery pack 1 b that is over-discharged.

(3) The charging device 2b of the second embodiment includes the charging circuit 21 b. For example, the charging device 2b reads the battery cell lower limit voltage VLc, which is set in accordance with the model of the battery cell 11, and determines over-discharging for each battery cell 11 based on the battery cell lower limit voltage VLc. This obviates or reduces charging of the battery pack 1b in which at least one battery cell 11 is over-discharged.

Third Embodiment

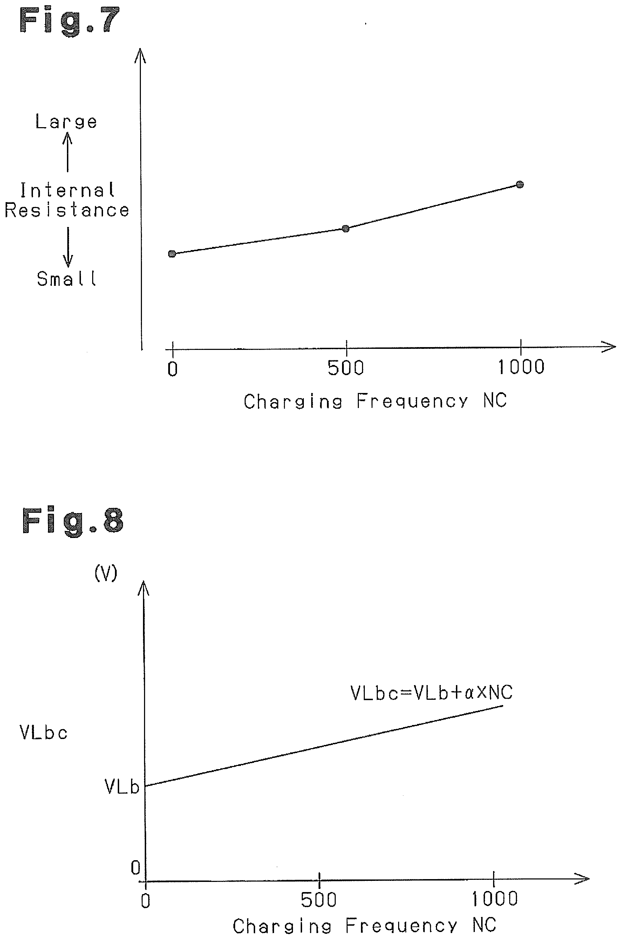

A third embodiment will now be described with reference to Figs. 7 to 9.

The third embodiment differs from the first embodiment in a battery pack 1c, a charging circuit 21 c, and a charging device 2c (refer to Fig. 1).

A memory 14c of the battery pack 1c stores the charging frequency NC of the battery pack 1c in addition to the battery block lower limit voltage VLb. The charging frequency NC indicates the number of times the battery pack 1c has been charged by the charging device 2c. The initial value of the charging frequency NC is zero (0). Whenever the battery pack 1c is charged, the charging frequency NC is increased in increments of one (1). The charging frequency NC is one example of the battery information.

Whenever the battery pack 1c is charged, the charging device 2c updates the charging frequency NC of the battery pack 1 c.

For example, a control unit 25c reads the battery information from the memory 14c when the battery pack 1c is attached to the charging device 2c. When the charging device 2c finishes charging the battery pack 1c, the charging frequency NC is increased by one (1) and updated in the memory 14c of the battery pack 1 c.

The reasons the battery pack 1c stores the charging frequency NC will now be described with reference to Fig. 7.

The graph of Fig. 7 illustrates the relationship of the charging frequency NC of the battery pack 1c and the internal resistance of the battery block 10. For example, the internal resistance of the battery block 10 increases as the charging circuit NC increases. An increase in the internal resistance increases the voltage drop in the battery block 10. This raises the lower limit voltage VLb. For example, an increase in the charging frequency NC raises the actual lower limit voltage VLbr from the lower limit voltage VLb, which is stored in the memory 14c.

Thus, if the lower limit voltage VLb stored in the battery pack 1c is used as the determination reference voltage when determining whether or not over-discharging is occurring in the battery pack 1c in the same manner as when the charging frequency NC of the battery pack 1c is zero (0), the problems described below would arise when the charging frequency NC of the battery pack 1c is high.

For example, the inter-terminal voltage Vmb of the battery block 10 may be higher than the lower limit voltage VLb stored in the memory 14c but lower than the actual lower limit voltage VLbr. In this case, when the lower limit voltage VLb in the memory 14c is set as the determination reference voltage, the battery pack 1c would be determined as not over-discharged. Thus, charging would be permitted. However, the inter-terminal voltage Vmb is lower than the actual lower limit voltage VLbr. Thus, charging should be prohibited.

In this respect, the third embodiment corrects the battery block lower limit voltage VLb based on the charging frequency NC whenever the battery pack 1c is charged. Thus, the memory 14c of the battery pack 1c stores the charging frequency NC to perform such correction.

One example for setting a new lower limit voltage VLb based on the charging frequency NC will now be described with reference to Fig. 8.

In the third embodiment, a correction function (equation 1), in which the charging frequency NC is a parameter, is set as the new lower limit voltage VLb (usage frequency corrected lower limit voltage VLbc).

$$\text{Usage Frequency Corrected Lower Limit Voltage VLbc = Lower Limit Voltage VLb +}$$
$$\text{Predetermined Coefficient } \alpha \times \text{Charging Frequency NC} \qquad (1)$$

In equation (1), the usage frequency corrected lower limit voltage VLbc is obtained by adding the product of the charging frequency NC and the predetermined coefficient $\alpha$ ($\alpha \times$ charging frequency NC) to the lower limit voltage VLb stored in the memory 14c.

For example, when the charging frequency NC is increased by one (1), the usage frequency corrected lower limit voltage VLbc is increased by the predetermined coefficient $\alpha$. The predetermined coefficient $\alpha$ is set based on a voltage falling rate of the battery block 10 relative to the charging frequency NC. Alternatively, the predetermined coefficient $\alpha$ may be set based on the relationship of the charging frequency NC and the lower limit voltage VLb that is obtained through tests.

The procedures of the charging commencement process in the third embodiment will now be described.

In step S310, the control unit 25c reads the battery block lower limit voltage VLb from the memory 14c of the battery pack 1 c.

In step S320, the control unit 25c acquires the inter-terminal voltage Vmb of the battery block 10 measured by a voltage measurement unit 22c.

In step S330, the control unit 25c reads the charging frequency NC from the memory 14c of the battery pack 1 c.

In step S340, the control unit 25c calculates the usage frequency corrected lower limit voltage VLbc based on the lower limit voltage VLb and the charging frequency NC using the correction function.

In step S350, the control unit 25c determines whether or not the inter-terminal voltage Vmb is higher than the usage frequency corrected lower limit voltage VLbc. When the inter-terminal voltage Vmb is higher than the usage frequency corrected lower limit voltage VLbc (YES), the control unit 25c proceeds to step S360 and permits charging. This starts charging.

When determining in step S350 that the inter-terminal voltage Vmb is lower than or equal to the usage frequency corrected lower limit voltage VLbc (NO), the control unit 25c determines that the battery pack 1c is over-discharged and proceeds to step S370 to prohibit charging.

The operation of the third embodiment will now be described.

In the first embodiment, the inter-terminal voltage Vmb of the battery block 10 is compared with the battery block lower limit voltage VLb but does not take into consideration the charging frequency NC. When the increase in internal resistance caused by the charging frequency NC is small, this would not affect the determination of over-discharging. However, when the increase in internal resistance caused by the charging frequency NC is large, this should not be ignored. Thus, in the third embodiment, the lower limit voltage VLb stored in the memory 14c is corrected based on the charging frequency NC to obtain the usage frequency corrected lower limit voltage VLbc as a determination reference voltage used to determine whether or not over-discharging is occurring. This decreases the difference between the usage frequency corrected lower limit voltage VLbc and the actual lower limit voltage VLbr. Thus, over-discharging of the battery pack 1c may be correctly determined by determining whether or not the inter-terminal voltage Vmb is higher than the usage frequency corrected lower limit voltage VLbc.

The advantages of the third embodiment will now be described.

(1) The battery pack 1c of the third embodiment uses the charging frequency NC and the lower limit voltage VLb.

Thus, the battery pack 1c is capable of correcting the lower limit voltage VLb, which is set for each model of the battery block 10, based on the charging frequency NC. Since the lower limit voltage VLb may be corrected based on the charging frequency NC, over-discharging of the charged battery pack 1c may be correctly determined.

(2) The charging circuit 21c of the third embodiment includes the voltage measurement unit 22c, which measures the inter-terminal voltage Vmb of the battery block 10, and the control unit 25c. The control unit 25c corrects the lower limit voltage VLb based on the charging circuit NC to calculate the usage frequency corrected lower limit voltage VLbc. Then, the control unit 25c compares the inter-terminal voltage Vmb, which is measured by the voltage measurement unit 22c, and the usage frequency corrected lower limit voltage VLbc. The control unit 25c permits charging when the inter-terminal voltage Vmb is higher than the usage frequency corrected lower limit voltage VLbc and prohibits charging when the inter-terminal voltage Vmb is lower than or equal to the usage frequency corrected lower limit voltage VLbc.

This configuration determines whether or not the battery pack 1c is over-discharged by comparing the usage frequency corrected lower limit voltage VLbc, which is obtained by correcting the lower limit voltage VLb with the charging frequency NC, with the inter-terminal voltage Vmb of the battery block 10. Thus, the determination may be performed more accurately than when the lower limit voltage VLb is not corrected with the charging frequency NC.

(3) The third embodiment may be combined with the second embodiment. For example, when determining the occurrence of over-discharging for each battery cell 11, the battery cell lower limit voltage VLc, which is set in accordance with the model of the battery cell 11, may be corrected with the charging frequency NC. This allows for correct determination of the occurrence of over-discharging for each battery cell 11 in the charged battery pack 1 c.

(4) The charging device 2c of the third embodiment includes the charging circuit 21c. The charging device 2c, for example, corrects the lower limit voltage VLb based on the charging frequency NC to determine over-discharging of the battery pack 1c with the usage frequency corrected lower limit voltage VLbc. This allows for correct determination of the occurrence of over-discharging in the battery pack 1c. Further, this obviates or reduces charging of the over-discharged battery pack 1c.

Fourth Embodiment

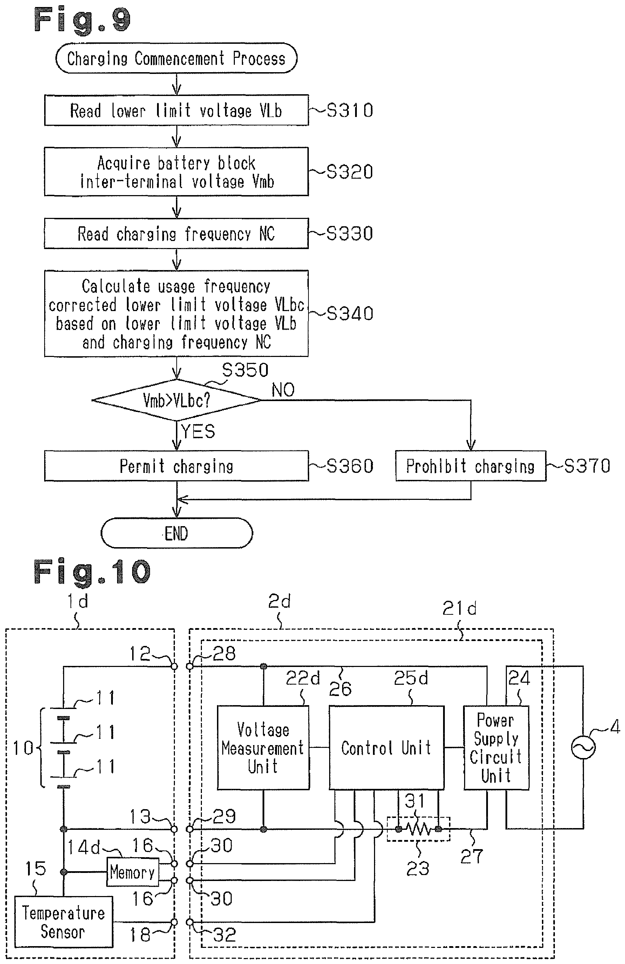

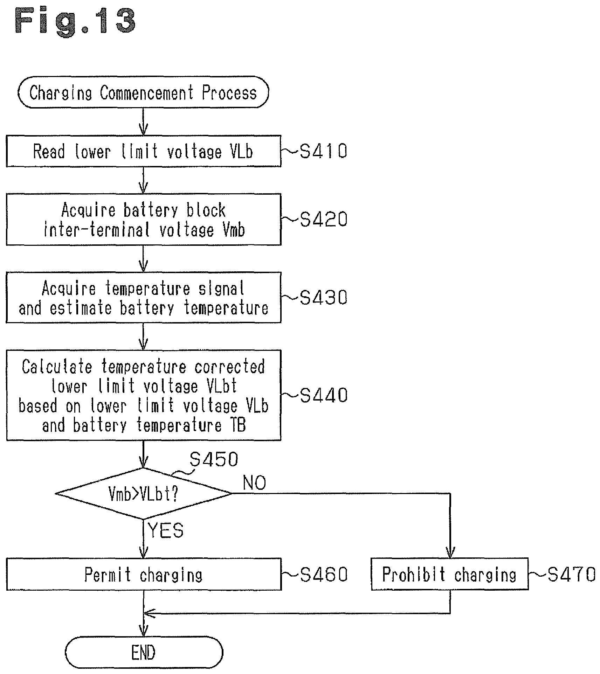

A fourth embodiment will now be described with reference to Figs. 10 to 13.

The fourth embodiment differs from the first embodiment in a battery pack 1d, a charging circuit 21d, and a charging device 2d.

Referring to Fig. 10, the battery pack 1d further includes a temperature sensor 15 that measures the temperature of the battery pack 1 d. The temperature sensor 15 is connected to an output terminal 18 that outputs a temperature signal.

The charging device 2d includes a control unit 25d connected to a signal terminal 32, which receives the temperature signal. The control unit 25d estimates the temperature of the battery pack 1d as the battery temperature TB based on the temperature signal TB. When the battery pack 1d is attached to the charging device 2d, the control unit 25d cyclically or continuously receives the temperature signal and estimates the battery temperature TB whenever receiving the temperature signal.

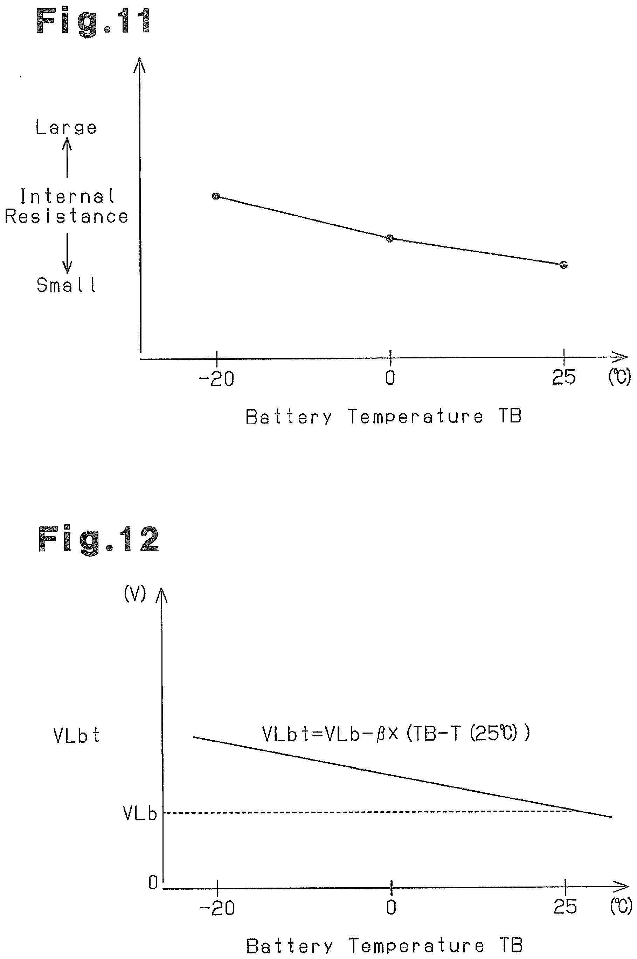

The reasons the charging device 2d estimates the battery temperature TB will now be described with reference to Fig. 11.

The graph of Fig. 11 shows the relationship of the battery temperature TB of the battery pack 1d and the internal resistance of the battery block 10. For example, the internal resistance of the battery block 10 increases as the battery temperature TB decreases. An increase in the internal resistance increases the voltage drop in the battery block 10 and raises the lower limit voltage VLb. For example, a decrease in the battery temperature TB raises the actual lower limit voltage VLbr from the lower limit voltage VLb, which is stored in a memory 14d.

Thus, if the lower limit voltage VLb stored in the battery pack 1d is used as the determination reference voltage when determining whether or not over-discharging is occurring in the battery pack 1d in the same manner as under a normal temperature (e.g., 25°C), the problems described below would arise.

For example, the inter-terminal voltage Vmb of the battery block 10 may be higher than the lower limit voltage VLb stored in the memory 14d but lower than the actual lower limit voltage VLbr. In this case, when the lower limit voltage VLb in the memory 14d is set as the determination reference voltage, the battery pack 1c would be determined as not over-discharged. Thus, charging would be permitted. However, the inter-terminal voltage Vmb is lower than the actual lower limit voltage VLbr. Thus, charging should be prohibited.

In this respect, the fourth embodiment corrects the battery block lower limit voltage VLb based on the battery temperature TB whenever the battery pack 1c is charged. Thus, the battery pack 1c includes the temperature sensor 15 to perform such correction.

One example for setting a new lower limit voltage VLb based on the battery temperature TB will now be described with reference to Fig. 12.

In the fourth embodiment, a correction function (equation 2), in which the battery temperature TB is a parameter, is set as the new lower limit voltage VLb (temperature corrected lower limit voltage VLbt).

$$\text{Temperature Corrected Lower Limit Voltage VLbt = Lower Limit Voltage VLb + Predetermined Coefficient } \beta \times \text{Temperature Difference } \Delta T \quad (1)$$

In equation (2), the temperature corrected lower limit voltage VLbt is obtained by subtracting the product of the temperature different $\Delta T$ (battery temperature - 25°C) and the predetermined coefficient $\beta$ ($\beta \times \Delta T$) from the lower limit voltage VLb stored in the memory 14d.

For example, the temperature corrected lower limit voltage VLbt is increased by the predetermined coefficient $\beta$ whenever the battery temperature TB is decreased by 1°C. The predetermined coefficient $\beta$ is set based on the voltage falling rate of the battery block 10 relative to the battery temperature TB. Alternatively, the predetermined coefficient $\beta$ may be set based on the relationship of the battery temperature TB and the lower limit voltage VLb that is obtained through tests.

The procedures of the charging commencement process in the fourth embodiment will now be described.

In step S410, the control unit 25d reads the battery block lower limit voltage VLb from the memory 14d of the battery pack 1 d.

In step S420, the control unit 25d acquires the inter-terminal voltage Vmb of the battery block 10 measured by a voltage measurement unit 22d.

In step S430, the control unit 25d acquires the temperature signal from the battery pack 1d and estimates the battery temperature TB.

In step S440, the control unit 25d calculates the temperature corrected lower limit voltage VLbt based on the lower limit voltage VLb and the battery temperature TB using the correction function.

In step S450, the control unit 25d determines whether or not the inter-terminal voltage Vmb is higher than the temperature corrected lower limit voltage VLbt. When the inter-terminal voltage Vmb is higher than the temperature corrected lower limit voltage VLbt (YES), the control unit 25d proceeds to step S460 and permits charging. This starts charging.

When determining in step S450 that the inter-terminal voltage Vmb is lower than or equal to the temperature corrected lower limit voltage VLbt (NO), the control unit 25d determines that the battery pack 1c is over-discharged and proceeds to step S470 to prohibit charging.

The operation of the fourth embodiment will now be described.

In the first embodiment, the inter-terminal voltage Vmb of the battery block 10 is compared with the battery block lower limit voltage VLb but does not take into consideration the battery temperature TB. When the increase in internal resistance caused by changes in the battery temperature TB is small, this would not affect the determination of over-discharging. However, when the increase in internal resistance caused by changes in the battery temperature TB is large, this should not be ignored.

Thus, in the fourth embodiment, the lower limit voltage VLb stored in the memory 14d is corrected based on the battery temperature TB to obtain the temperature corrected lower limit voltage VLbt as a determination reference voltage used to determine whether or not over-discharging is occurring. This decreases the difference between the temperature corrected lower limit voltage VLbt and the actual lower limit voltage VLbr. Thus, over-discharging of the battery pack 1 d may be correctly determined by determining whether or not the inter-terminal voltage Vmb is higher than the temperature corrected lower limit voltage VLbt.

The advantages of the fourth embodiment will now be described.

(1) The battery pack 1d of the fourth embodiment includes the temperature sensor 15. Thus, the battery pack 1 d is capable of correcting the lower limit voltage VLb, which is set for each model of the battery block 10, based on the battery temperature TB. Since the lower limit voltage VLb may be corrected based on the battery temperature TB, over-discharging of the charged battery pack 1 c may be correctly determined even under different ambient temperature environments.

(2) The charging circuit 21d of the fourth embodiment includes the voltage measurement unit 22d, which measures the inter-terminal voltage Vmb of the battery block 10, and the control unit 25d. The control unit 25d estimates the battery temperature TB from the temperature signal TB, reads the lower limit voltage VLb from the memory 14d, corrects the lower limit voltage VLb with the battery temperature TB to calculate the temperature corrected lower limit voltage VLbt, and compares the inter-terminal voltage Vmb with the temperature corrected lower limit voltage VLbt. The control unit 25d permits charging when the inter-terminal voltage Vmb is higher than the temperature corrected lower limit voltage VLbt and prohibits charging when the inter-terminal voltage Vmb is lower than or equal to the temperature corrected lower limit voltage VLbt. This configuration determines whether or not the battery pack 1d is over-discharged by comparing the temperature corrected lower limit voltage VLbt, which is obtained by correcting the lower limit voltage VLb with the battery temperature TB, with the inter-terminal voltage Vmb of the battery block 10. Thus, the determination may be performed more accurately than when the lower limit voltage VLb is not corrected with the battery temperature TB.

(3) The fourth embodiment may be combined with the second embodiment. For example, when determining the occurrence of over-discharging for each battery cell 11, the battery cell lower limit voltage VLc, which is set in accordance with the model of the battery cell 11, may be corrected with the battery temperature TB. This allows for correct determination of the occurrence of over-discharging for each battery cell 11 even under different ambient temperature environments.

(4) The charging device 2d of the fourth embodiment includes the charging circuit 21 d. The charging device 2d corrects the lower limit voltage VLb based on the battery temperature TB to determine over-discharging of the battery pack 1d with the temperature corrected lower limit voltage VLbt. This obviates or reduces charging of the over-discharged battery pack 1d. For example, improper charging, such as charging of the over-discharged battery pack 1d, may be reduced.

(5) The fourth embodiment may be combined with the third embodiment. For example, when determining whether or not the battery block 10 is over-discharged, the battery block lower limit voltage VLb, which is set for each model of the battery block 10, is corrected with the charging frequency NC and battery temperature TB to calculate a temperature and usage frequency corrected lower limit voltage VLbct. This allows for correct determination of whether or not the battery pack 1d is over-discharged even under different ambient temperature environments and/or when the usage frequency changes.

(6) The fourth embodiment may be combined with the second embodiment and the third embodiment. For example, when determining whether or not the battery block 10 is over-discharged, the battery cell lower limit voltage VLc, which is set for each model of the battery cell 11, is corrected with the charging frequency NC and battery temperature TB to calculate a temperature and usage frequency corrected lower limit voltage VLbct. This allows for correct determination of whether or not each battery cell 11 is over-discharged even under different ambient temperature environments and/or when the usage frequency changes.

It should be apparent to those skilled in the art that the present invention may be embodied in many other specific forms without departing from the spirit or scope of the invention. Particularly, it should be understood that the present invention may be embodied in the following forms.

The first to fourth embodiments are examples in which the charging devices 2a to 2d determine whether or not over-discharging is occurring in the battery packs 1a to 1d. However, the over-discharging determination may be performed by a device other than a charging device. For example, the electric instrument using the battery packs 1a to 1d may be configured to perform the over-discharging determination. Further, a tester may be used to perform the determination. Since the battery packs 1a to 1d include the lower limit voltages VLb and VLc unique to the battery packs 1a to 1 d, the device determining whether or not over-discharging is occurring may be supplied with the lower limit voltages VLb and VLc.

The first to fourth embodiments are examples in which the storage media of the memories 14a to 14d are rewritable semiconductor memory devices. However, the storage media is not limited to rewritable semiconductor memory devices. When the lower limit voltages VLb and VLc are stored but information is not added or updated like in the first and second embodiments, the storage media may be a read only memory (ROM). Alternatively, the storage media may be bar codes or numerals stored in the battery packs 1a to 1d.

The third and fourth embodiments are examples in which the correction functions (equations 1 and 2) are linear functions. However, the correction functions are not limited to linear functions and may be exponential functions or logarithm functions.

In the fourth embodiment, the charging commencement process is performed only when starting charging but may be performed during charging. For example, during charging, the inter-terminal voltage Vmb of the battery block 10 may be compared with the temperature corrected lower limit voltage VLbt. When the inter-terminal voltage Vmb of the battery block 10 becomes lower than or equal to the temperature corrected lower limit voltage VLbt, charging is prohibited. In this configuration, when over-discharging is detected during charging, the charging may be prohibited. Charging usually increases the inter-terminal voltage Vmb. Thus, the inter-terminal voltage Vmb seldom becomes lower than or equal to the temperature corrected lower limit voltage VLbt. However, such a situation may arise when the ambient temperature suddenly decreases. Accordingly, this example is particularly effective when using the battery pack 1d under an environment in which the ambient temperature changes.

The battery packs 1a to 1d of the first to fourth embodiments are used in, for example, a chargeable power tool. Examples of chargeable power tools using the battery packs 1a to 1d includes a chargeable driver, a chargeable saw, a chargeable air pump, a chargeable cutter, a chargeable blower, and a chargeable chain saw.

**Claims**

1.  A system comprising:

    a variety of battery packs (1a) having different electrical characteristics, wherein each battery pack includes a battery block (10) and a memory (14a), wherein the battery block (10) includes at least one battery cell (11), and the memory (14a) stores battery information,
    wherein the battery information includes a battery block lower limit voltage (VLb) and/or a battery cell lower limit voltage (VLc),
    wherein the battery block lower limit voltage (VLb) is a value set for each model of the battery block (10), wherein the model of a battery block (10) is set in accordance with a battery characteristics of the battery cells (11) and a quantity of the battery cells (11),
    and wherein the battery cell lower limit voltage (VLc) is set in accordance with a model of the battery cells (11); and a charging device (2a) configured to charge each of the variety of different battery packs (1a),
    wherein the charging device (2a) is configured to determine over-discharging of one battery pack of the variety of battery packs when the one battery pack is attached to the charging device by

    (a) reading the battery block lower limit voltage (VLb) from the memory of the attached battery pack (1a), and by measuring an inter-terminal voltage (Vmb) of the battery block (10) or an inter-terminal voltage (Vmc) of each battery cell (11), and by determining whether or not the attached battery pack is over-discharged based on the battery block lower limit voltage (VLb) and the measured inter-terminal voltage (Vmb) of the battery block (10), and/or by
    (b) reading the battery cell lower limit voltage (VLc) from the memory of the attached battery pack (1a) and determining whether or not the attached battery pack is over-discharged based on the battery cell lower limit voltage (VLc) and the measured internal-terminal voltage (Vmc) of each battery cell (11), wherein the charging device (2a) is further configured to prohibit charging of the one battery pack, when the one battery pack attached to the charging device is over-discharged.

2.  The system according to claim 1, being **characterized in that** the memory of the attached battery pack (1c) stores a charging frequency (NC).

3.  The system according to one of the preceding claims, further being **characterized by** a temperature sensor (15) of the attached battery pack (1d), wherein the temperature sensor (15) is configured to measure a temperature of the battery pack.

4.  The system according to any one of claims 1 to 3, wherein the attached battery pack (1a) comprises communication terminals (16) coupled to the memory (14a) to enable reading and writing the battery information.

5.  The system according to claim 1, wherein the memory of the attached battery pack (1a) stores the battery block lower limit voltage (VLb), wherein the charging device (2a) includes a voltage measurement unit (22a) and a control unit (25a), the voltage measurement unit (22a) is configured to measure an inter-terminal voltage (Vmb) of the battery block (10), and the control unit (25a) is configured to control charging in accordance with the inter-terminal voltage (Vmb) measured by the voltage measurement unit (22a), the control unit (25a) is configured to:

    read the battery block lower limit voltage (VLb) from the memory (14a);
    compare the inter-terminal voltage with the battery block lower limit voltage (VLb);
    permit charging when the inter-terminal voltage (Vmb) is higher than the battery block lower limit voltage (VLb); and
    prohibit charging when the inter-terminal voltage is lower than or equal to the battery block lower limit voltage.

6.  The system according to claim 1, wherein the memory of the attached battery pack (1b) stores the battery cell lower limit voltage (VLc), wherein the charging device (2b) includes a voltage measurement unit (22b) and a control unit (25b), the voltage measurement unit (22b) is configured to measure an inter-terminal voltage of each battery cell, and the control unit (25b) is configured to control charging in accordance with the inter-terminal voltages of the battery cells measured by the voltage measurement unit (22b), the control unit (25b) is configured to:

    read the battery cell lower limit voltage (VLc) from the memory (14b);
    compare each inter-terminal voltage (Vmc), which is measured by the voltage measurement unit (22b), with the battery cell lower limit voltage (VLc);
permit charging when each inter-terminal voltage is higher than the battery cell lower limit voltage (VLc); and
prohibit charging when at least one of the inter-terminal voltages is lower than or equal to the battery cell lower limit voltage (VLc).

7. The system according to claim 2, wherein the memory of the attached battery pack (1c) stores the battery block lower limit voltage (VLb) and the charging frequency (NC), wherein the charging device includes a voltage measurement unit (22a) and a control unit (25a), the voltage measurement unit (22a) is configured to measure an inter-terminal voltage (Vmb) of the battery block, and the control unit (25a) is configured to control charging in accordance with the inter-terminal voltage measured by the voltage measurement unit (22a), and the control unit (25a) is configured to:

read the battery block lower limit voltage (VLb) and the charging frequency (NC) from the memory;
calculate a usage frequency corrected lower limit voltage (VLbc) based on the battery block lower limit voltage (VLb) and the charging frequency (NC) using a correction function;
compare the battery block inter-terminal voltage (Vmb), which is measured by the voltage measurement unit (22a), with the usage frequency corrected lower limit voltage (VLbc);
permit charging when the inter-terminal voltage is higher than the usage frequency corrected lower limit voltage; and
prohibit charging when the inter-terminal voltage is lower than or equal to the usage frequency corrected lower limit voltage.

8. The system according to claim 2, wherein the memory of the attached battery pack stores the battery cell lower limit voltage (VLc) and the charging frequency, wherein the charging device includes a voltage measurement unit (22b) and a control unit (25b), the voltage measurement unit (22b) is configured to measure an inter-terminal voltage of each battery cell, and the control unit (25b) is configured to control charging in accordance with the inter-terminal voltages of the battery cells measured by the voltage measurement unit, and the control unit (25b) is configured to read the battery cell lower limit voltage (VLc) and the charging frequency from the memory;
calculate a usage frequency corrected lower limit voltage based on the battery cell lower limit voltage and the charging frequency using a correction function;
compare each inter-terminal voltage, which is measured by the voltage measurement unit (22b), with the usage frequency corrected lower limit voltage;
permit charging when each inter-terminal voltage is higher than the usage frequency corrected lower limit voltage; and
prohibit charging when at least one of the inter-terminal voltages is lower than or equal to the usage frequency corrected lower limit voltage.

9. The system according to claim 3, wherein the memory of the attached battery pack stores the battery block lower limit voltage (VLb), wherein the charging device includes a voltage measurement unit (22d) and a control unit (25d), the voltage measurement unit (22d) is configured to measure an inter-terminal voltage (Vmb) of the battery block, and the control unit (25d) is configured to control charging in accordance with the inter-terminal voltage (Vmb) measured by the voltage measurement unit (22d), and the control unit (25d) is configured to:

acquire a temperature signal from the temperature sensor of the battery pack to estimate a battery temperature (TB);
read the battery block lower limit voltage (VLb) from the memory;
calculate a temperature corrected lower limit voltage based on battery block lower limit voltage (VLb) and the estimated battery temperature (TB) using a correction function;
compare the inter-terminal voltage, which is measured by the voltage measurement unit (22d), with the temperature corrected lower limit voltage;
permit charging when the inter-terminal voltage is higher than the temperature corrected lower limit voltage; and
prohibit charging when the inter-terminal voltage is lower than or equal to the temperature corrected lower limit voltage.

10. The system according to claim 3 wherein the memory of the attached battery pack stores the battery cell lower limit voltage (VLc), wherein the charging device includes a voltage measurement unit (22b) and a control unit (25b and 25d), the voltage measurement unit (22b) is configured to measure an inter-terminal voltage of each battery cell, and the control unit (25b and 25d) is configured to control charging in accordance with the inter-terminal voltages of the battery cells measured by the voltage measurement unit, and the control unit is configured to:

acquire a temperature signal from the temperature sensor of the battery pack to estimate a battery temperature;

read the battery cell lower limit voltage (VLc) from the memory;

calculate a temperature corrected lower limit voltage based on the battery cell lower limit voltage (VLc) and the estimated battery temperature using a correction function;

compare each inter-terminal voltage, which is measured by the voltage measurement unit (22b), with the temperature corrected lower limit voltage;

permit charging when each inter-terminal voltage is higher than the temperature corrected lower limit voltage; and

prohibit charging when at least one of the inter-terminal voltages is lower than or equal to the temperature corrected lower limit voltage.

11. The system according to claims 2 and 3, wherein the memory of the attached battery pack stores the battery block lower limit voltage and the charging frequency, wherein the charging devicet includes a voltage measurement unit (22d) and a control unit (25d), the voltage measurement unit (22d) is configured to measure an inter-terminal voltage of the battery block, and the control unit (25d) is configured to control charging in accordance with the inter-terminal voltage measured by the voltage measurement unit (22), and

the control unit (25d) is configured to:

acquire a temperature signal from the temperature sensor of the battery pack to estimate a battery temperature;

read the battery block lower limit voltage (VLb) and the charging frequency from the memory;

calculate a temperature and usage frequency corrected lower limit voltage based on the battery block lower limit voltage and the estimated battery temperature and the charging frequency using a correction function;

compare the inter-terminal voltage, which is measured by the voltage measurement unit (22d), with the temperature and usage frequency corrected lower limit voltage;

permit charging when the inter-terminal voltage is higher than the temperature and usage frequency corrected lower limit voltage; and

prohibit charging when the inter-terminal voltage is lower than or equal to the temperature and usage frequency corrected lower limit voltage.

12. The system according to claims 2 and 3, wherein the memory of the attached battery pack stores the battery cell lower limit voltage (VLc) and the charging frequency, wherein the charging device includes a voltage measurement unit (22b) and a control unit (25b and 25d), the voltage measurement unit (22b) is configured to measure an inter-terminal voltage of each battery cell, and the control unit (25b and 25d) is configured to control charging in accordance with the inter-terminal voltages of the battery cells measured by the voltage measurement unit (22b), and

the control unit (25b and 25d) is configured to:

acquire a temperature signal from the temperature sensor of the battery pack to estimate a battery temperature;

read the battery cell lower limit voltage (VLc) and the charging frequency from the memory;

calculate a temperature and usage frequency corrected lower limit voltage based on the battery cell lower limit voltage (VLc) and the battery temperature and the charging frequency using a correction function;

compare each inter-terminal voltage, which is measured by the voltage measurement unit (22b), with the temperature and usage frequency corrected lower limit voltage;

permit charging when each inter-terminal voltage is higher than the temperature and

usage frequency corrected lower limit voltage; and

prohibit charging when at least one of the inter-terminal voltages is lower than or equal to the temperature and usage frequency corrected lower limit voltage.

**Patentansprüche**

1. System, umfassend:

eine Vielfalt von Batteriepacks (1a) mit verschiedenen elektrischen Eigenschaften, wobei jedes Batteriepack einen Batterieblock (10) und einen Speicher (14a) umfasst, wobei der Batterieblock (10) mindestens eine Batteriezelle (11) umfasst und der Speicher (14a) die Batterieinformationen speichert,

wobei die Batterieinformationen eine Batterieblock-Spannungsuntergrenze (VLb) und/oder eine Batteriezellen-Spannungsuntergrenze (VLc) umfassen,

wobei die Batterieblock-Spannungsuntergrenze (VLb) ein Wert ist, der für jedes Modell des Batterieblocks (10) eingestellt ist, wobei das Modell eines Batterieblocks (10) gemäß einer Batterieeigenschaft der Batteriezellen (11) und einer Menge der Batteriezellen (11) eingestellt ist, und wobei die Batteriezellen-Spannungsuntergrenze (VLc) gemäß einem Modell der Batteriezellen (11) eingestellt ist; und

eine Ladevorrichtung (2a), welche so konfiguriert ist, dass sie jedes der Vielfalt verschiedener Batteriepacks (1a) lädt,

wobei die Ladevorrichtung (2a) so konfiguriert ist, dass sie eine Überentladung eines Batteriepacks der Vielfalt von Batteriepacks bestimmt, wenn das eine Batteriepack mit der Ladevorrichtung verbunden ist, durch

(a) Auslesen der Batterieblock-Spannungsuntergrenze (VLb) aus dem Speicher des verbundenen Batteriepacks (1a) und durch

Messen einer Spannung (Vmb) zwischen Anschlüssen des Batterieblocks (10) oder einer Spannung (Vmc) zwischen Anschlüssen jeder Batteriezelle (11) und durch

Bestimmen, ob das verbundene Batteriepack überentladen ist oder nicht, auf der Basis der Batterieblock-Spannungsuntergrenze (VLb) und der gemessenen Spannung (Vmb) zwischen Anschlüssen des Batterieblocks (10) und/oder durch

(b) Auslesen der Batteriezellen-Spannungsuntergrenze (VLc) aus dem Speicher des verbundenen Batteriepacks (1a) und Bestimmen, ob das verbundene Batteriepack überentladen ist oder nicht, auf der Basis der Batteriezellen-Spannungsuntergrenze (VLc) und der gemessenen Spannung (Vmc) zwischen Anschlüssen jeder Batteriezelle (11),

wobei die Ladevorrichtung (2a) ferner so konfiguriert ist, dass sie ein Laden des einen Batteriepacks verhindert, wenn das eine Batteriepack, das mit der Ladevorrichtung verbunden ist, überentladen ist.

2. System nach Anspruch 1, **dadurch gekennzeichnet, dass** der Speicher des verbundenen Batteriepacks (1c) eine Ladefrequenz (NC) speichert.

3. System nach einem der vorhergehenden Ansprüche, ferner **gekennzeichnet durch** einen Temperatursensor (15) des verbundenen Batteriepacks (1d), wobei der Temperatursensor (15) so konfiguriert ist, dass er eine Temperatur des Batteriepacks misst.

4. System nach einem der Ansprüche 1 bis 3, wobei das verbundene Batteriepack (1a) Kommunikationsanschlüsse (16) umfasst, die mit dem Speicher (14a) verbunden sind, um ein Auslesen und Speichern der Batterieinformationen zu ermöglichen.

5. System nach Anspruch 1, wobei der Speicher des verbundenen Batteriepacks (1a) die Batterieblock-Spannungsuntergrenze (VLb) speichert, wobei die Ladevorrichtung (2a) eine Spannungsmesseinheit (22a) und eine Steuerungseinheit (25a) umfasst, wobei die Spannungsmesseinheit (22a) so konfiguriert ist, dass sie eine Spannung (Vmb) zwischen Anschlüssen des Batterieblocks (10) misst, und die Steuerungseinheit (25a) so konfiguriert ist, dass sie ein Laden gemäß der von der Spannungsmesseinheit (22a) gemessenen Spannung zwischen den Anschlüssen (Vmb) steuert, wobei die Steuerungseinheit (25a) für Folgendes konfiguriert ist:

Auslesen der Batterieblock-Spannungsuntergrenze (VLb) aus dem Speicher (14a);
Vergleichen der Spannung zwischen den Anschlüssen mit der Batterieblock-Spannungsuntergrenze (VLb);
Zulassen des Ladens, wenn die Spannung zwischen den Anschlüssen (Vmb) höher als die Batterieblock-Spannungsuntergrenze (VLb) ist; und
Verhindern des Ladens, wenn die Spannung zwischen den Anschlüssen niedriger als oder gleich hoch wie die Batterieblock-Spannungsuntergrenze ist.

6. System nach Anspruch 1, wobei der Speicher des verbundenen Batteriepacks (1b) die Batteriezellen-Spannungsuntergrenze (VLc) speichert, wobei die Ladevorrichtung (2b) eine Spannungsmesseinheit (22b) und eine Steuerungseinheit (25b) umfasst, wobei die Spannungsmesseinheit (22b) so konfiguriert ist, dass sie eine Spannung zwischen Anschlüssen jeder Batteriezelle misst, und die Steuerungseinheit (25b) so konfiguriert ist, dass sie ein Laden gemäß der von der Spannungsmesseinheit (22b) gemessenen Spannung zwischen den Anschlüssen (Vmb) der Batteriezellen steuert, wobei die Steuerungseinheit (25b) für Folgendes konfiguriert ist:

Auslesen der Batteriezellen-Spannungsuntergrenze (VLc) aus dem Speicher (14b);
Vergleichen jeder Spannung zwischen den Anschlüssen (Vmc), welche durch die Spannungsmesseinheit (22b) gemessen wird, mit der Batteriezellen-Spannungsuntergrenze (VLc);
Zulassen des Ladens, wenn jede Spannung zwischen den Anschlüssen höher als die Batteriezellen-Spannungsuntergrenze (VLc) ist; und

Verhindern des Ladens, wenn mindestens eine der Spannungen zwischen den Anschlüssen niedriger als oder gleich hoch wie die Batteriezellen-Spannungsuntergrenze (VLc) ist.

7. System nach Anspruch 2, wobei der Speicher des verbundenen Batteriepacks (1c) die Batterieblock-Spannungsuntergrenze (VLb) und die Ladefrequenz (NC) speichert, wobei die Ladevorrichtung eine Spannungsmesseinheit (22a) und eine Steuerungseinheit (25a) umfasst, die Spannungsmesseinheit (22a) so konfiguriert ist, dass sie eine Spannung zwischen Anschlüssen (Vmb) des Batterieblocks misst, und die Steuerungseinheit (25a) zum Steuern des Ladens gemäß der von der Spannungsmesseinheit (22a) gemessenen Spannung zwischen den Anschlüssen konfiguriert ist und die Steuerungseinheit (25a) für Folgendes konfiguriert ist:

Auslesen der Batterieblock-Spannungsuntergrenze (VLb) und der Ladefrequenz (NC) aus dem Speicher;
Berechnen einer gebrauchsfrequenzkorrigierten Spannungsuntergrenze (VLbc) auf der Basis der Batterieblock-Spannungsuntergrenze (VLb) und der Ladefrequenz (NC) unter Verwendung einer Korrekturfunktion;
Vergleichen der Spannung zwischen den Anschlüssen des Batterieblocks (Vmb), welche von der Spannungsmesseinheit (22a) gemessen wird, mit der gebrauchsfrequenzkorrigierten Spannungsuntergrenze (VLbc);
Zulassen des Ladens, wenn die Spannung zwischen den Anschlüssen höher als die gebrauchsfrequenzkorrigierte Spannungsuntergrenze ist; und
Verhindern des Ladens, wenn die Spannung zwischen den Anschlüssen niedriger als oder gleich hoch wie die gebrauchsfrequenzkorrigierte Spannungsuntergrenze (VLbc) ist.

8. System nach Anspruch 2, wobei der Speicher des verbundenen Batteriepacks die Batteriezellen-Spannungsuntergrenze (VLc) und die Ladefrequenz speichert, wobei die Ladevorrichtung eine Spannungsmesseinheit (22b) und eine Steuerungseinheit (25b) umfasst, die Spannungsmesseinheit (22b) so konfiguriert ist, dass sie eine Spannung zwischen Anschlüssen (Vmb) jeder Batteriezelle misst, und die Steuerungseinheit (25b) so konfiguriert ist, dass sie ein Laden gemäß den von der Spannungsmesseinheit gemessenen Spannungen zwischen den Anschlüssen der Batteriezellen steuert, und
die Steuerungseinheit (25b) für Folgendes konfiguriert ist:

Auslesen der Batteriezellen-Spannungsuntergrenze (VLc) und der Ladefrequenz (NC) aus dem Speicher;
Berechnen einer gebrauchsfrequenzkorrigierten Spannungsuntergrenze auf der Basis der Batteriezellen-Spannungsuntergrenze und der Ladefrequenz unter Verwendung einer Korrekturfunktion;
Vergleichen jeder Spannung zwischen den Anschlüssen, welche von der Spannungsmesseinheit (22b) gemessen wird, mit der gebrauchsfrequenzkorrigierten Spannungsuntergrenze;
Zulassen des Ladens, wenn jede Spannung zwischen den Anschlüssen höher als die gebrauchsfrequenzkorrigierte Spannungsuntergrenze ist; und
Verhindern des Ladens, wenn mindestens eine der Spannungen zwischen den Anschlüssen niedriger als oder gleich hoch wie die gebrauchsfrequenzkorrigierte Spannungsuntergrenze ist.

9. System nach Anspruch 3, wobei der Speicher des verbundenen Batteriepacks die Batterieblock-Spannungsuntergrenze (VLb) speichert, wobei die Ladevorrichtung eine Spannungsmesseinheit (22d) und eine Steuerungseinheit (25d) umfasst, die Spannungsmesseinheit (22d) so konfiguriert ist, dass sie eine Spannung zwischen Anschlüssen (Vmb) des Batterieblocks misst, und die Steuerungseinheit (25d) so konfiguriert ist, dass sie ein Laden gemäß der von der Spannungsmesseinheit (22d) gemessenen Spannung zwischen den Anschlüssen (Vmb) steuert, und
die Steuerungseinheit (25d) für Folgendes konfiguriert ist:

Erhalten eines Temperatursignals von dem Temperatursensor des Batteriepacks zum Schätzen einer Batterietemperatur (TB) ;
Auslesen der Batterieblock-Spannungsuntergrenze (VLb) aus dem Speicher;
Berechnen einer temperaturkorrigierten Spannungsuntergrenze auf der Basis der Batterieblock-Spannungsuntergrenze (VLb) und der geschätzten Batterietemperatur (TB) unter Verwendung einer Korrekturfunktion;
Vergleichen der Spannung zwischen den Anschlüssen (Vmb), welche von der Spannungsmesseinheit (22d) gemessen wird, mit der temperaturkorrigierten Spannungsuntergrenze;
Zulassen des Ladens, wenn die Spannung zwischen den Anschlüssen höher als die temperaturkorrigierte Spannungsuntergrenze ist; und
Verhindern des Ladens, wenn die Spannung zwischen den Anschlüssen niedriger als oder gleich hoch wie die temperaturkorrigierte Spannungsuntergrenze ist.

10. System nach Anspruch 3, wobei der Speicher des verbundenen Batteriepacks die Batteriezellen-Spannungsuntergrenze (VLc) speichert, wobei die Ladevorrichtung eine Spannungsmesseinheit (22b) und eine Steuerungseinheit (25b und 25d) umfasst, die Spannungsmesseinheit (22b) so konfiguriert ist, dass sie eine Spannung zwischen Anschlüssen jeder Batteriezelle misst, und die Steuerungseinheit (25b und 25d) so konfiguriert ist, dass sie ein Laden gemäß den von der Spannungsmesseinheit gemessenen Spannungen zwischen den Anschlüssen der Batteriezellen steuert, und
die Steuerungseinheit für Folgendes konfiguriert ist:

Erhalten eines Temperatursignals von dem Temperatursensor des Batteriepacks zum Schätzen einer Batterietemperatur;
Auslesen der Batteriezellen-Spannungsuntergrenze (VLc) aus dem Speicher;
Berechnen einer temperaturkorrigierten Spannungsuntergrenze auf der Basis der Batteriezellen-Spannungsuntergrenze (VLc) und der geschätzten Batterietemperatur unter Verwendung einer Korrekturfunktion;
Vergleichen jeder Spannung zwischen den Anschlüssen, welche von der Spannungsmesseinheit (22b) gemessen wird, mit der temperaturkorrigierten Spannungsuntergrenze;
Zulassen des Ladens, wenn jede Spannung zwischen den Anschlüssen höher als die temperaturkorrigierte Spannungsuntergrenze ist; und
Verhindern des Ladens, wenn mindestens eine der Spannungen zwischen den Anschlüssen niedriger als oder gleich hoch wie die temperaturkorrigierte Spannungsuntergrenze ist.

11. System nach Anspruch 2 und 3, wobei der Speicher des verbundenen Batteriepacks die Batterieblock-Spannungsuntergrenze und die Ladefrequenz speichert, wobei die Ladevorrichtung eine Spannungsmesseinheit (22d) und eine Steuerungseinheit (25d) umfasst, die Spannungsmesseinheit (22d) so konfiguriert ist, dass sie eine Spannung zwischen Anschlüssen des Batterieblocks misst, und die Steuerungseinheit (25d) so konfiguriert ist, dass sie ein Laden gemäß der von der Spannungsmesseinheit (22) gemessenen Spannung zwischen den Anschlüssen steuert, und
die Steuerungseinheit (25d) für Folgendes konfiguriert ist:

Erhalten eines Temperatursignals von dem Temperatursensor des Batteriepacks zum Schätzen einer Batterietemperatur;
Auslesen der Batterieblock-Spannungsuntergrenze (VLb) und der Ladefrequenz aus dem Speicher;
Berechnen einer temperatur- und gebrauchsfrequenzkorrigierten Spannungsuntergrenze auf der Basis der Batterieblock-Spannungsuntergrenze und der geschätzten Batterietemperatur und der Ladefrequenz unter Verwendung einer Korrekturfunktion;
Vergleichen der Spannung zwischen den Anschlüssen, welche von der Spannungsmesseinheit (22d) gemessen wird, mit der temperatur- und gebrauchsfrequenzkorrigierten Spannungsuntergrenze;
Zulassen des Ladens, wenn die Spannung zwischen den Anschlüssen höher als die temperatur- und gebrauchsfrequenzkorrigierte Spannungsuntergrenze ist; und
Verhindern des Ladens, wenn die Spannung zwischen den Anschlüssen niedriger als oder gleich hoch wie die temperatur- und gebrauchsfrequenzkorrigierte Spannungsuntergrenze ist.

12. System nach Anspruch 2 und 3, wobei der Speicher des verbundenen Batteriepacks die Batteriezellen-Spannungsuntergrenze (VLc) und die Ladefrequenz speichert, wobei die Ladevorrichtung eine Spannungsmesseinheit (22b) und eine Steuerungseinheit (25b und 25d) umfasst, die Spannungsmesseinheit (22b) so konfiguriert ist, dass sie eine Spannung zwischen Anschlüssen jeder Batteriezelle misst, und die Steuerungseinheit (25b und 25d) so konfiguriert ist, dass sie ein Laden gemäß den von der Spannungsmesseinheit (22b) gemessenen Spannung zwischen den Anschlüssen der Batteriezellen steuert, und
die Steuerungseinheit (25b und 25d) für Folgendes konfiguriert ist:

Erhalten eines Temperatursignals von dem Temperatursensor des Batteriepacks zum Schätzen einer Batterietemperatur;
Auslesen der Batteriezellen-Spannungsuntergrenze (VLc) und der Ladefrequenz aus dem Speicher;
Berechnen einer temperatur- und gebrauchsfrequenzkorrigierten Spannungsuntergrenze auf der Basis der Batteriezellen-Spannungsuntergrenze (VLc) und der Batterietemperatur und der Ladefrequenz unter Verwendung einer Korrekturfunktion;
Vergleichen jeder Spannung zwischen den Anschlüssen, welche von der Spannungsmesseinheit (22b) gemessen wird, mit der temperatur- und gebrauchsfrequenzkorrigierten Spannungsuntergrenze;
Zulassen des Ladens, wenn jede Spannung zwischen den Anschlüssen höher als die temperatur- und gebrauchsfrequenzkorrigierte Spannungsuntergrenze ist; und

Verhindern des Ladens, wenn mindestens eine der Spannungen zwischen den Anschlüssen niedriger als oder gleich hoch wie die temperatur- und gebrauchsfrequenzkorrigierte Spannungsuntergrenze ist.

**Revendications**

1. Système comprenant :

   une variété de batteries d'alimentation (1a) présentant des caractéristiques électriques différentes, dans lequel chaque batterie d'alimentation inclut un bloc de batterie (10) et une mémoire (14a), dans lequel le bloc de batterie (10) inclut au moins une cellule de batterie (11), et la mémoire (14a) stocke des informations de batterie ;
   dans lequel les informations de batterie incluent une tension limite inférieure de bloc de batterie (VLb) et/ou une tension limite inférieure de cellule de batterie (VLc) ;
   dans lequel la tension limite inférieure de bloc de batterie (VLb) est une valeur définie pour chaque modèle du bloc de batterie (10), dans lequel le modèle d'un bloc de batterie (10) est défini selon une caractéristique de batterie des cellules de batterie (11) et une quantité des cellules de batterie (11), et dans lequel la tension limite inférieure de cellule de batterie (VLc) est définie selon un modèle des cellules de batterie (11) ; et
   un dispositif de charge (2a) configuré de manière à charger chacune de la variété de batteries d'alimentation distinctes (1a) ;
   dans lequel le dispositif de charge (2a) est configuré de manière à déterminer une décharge excessive d'une batterie d'alimentation de la variété des batteries d'alimentation lorsque ladite une batterie d'alimentation est fixée au dispositif de charge :

   (a) en lisant la tension limite inférieure de bloc de batterie (VLb) à partir de la mémoire de la batterie d'alimentation fixée (1a) ; et

   en mesurant une tension entre les bornes (Vmb) du bloc de batterie (10) ou une tension entre les bornes (Vmc) de chaque cellule de batterie (11) ; et
   en déterminant si la batterie d'alimentation fixée est ou non excessivement déchargée sur la base de la tension limite inférieure de bloc de batterie (VLb) et de la tension entre les bornes mesurée (Vmb) du bloc de batterie (10) ; et/ou

   (b) en lisant la tension limite inférieure de cellule de batterie (VLc) à partir de la mémoire de la batterie d'alimentation fixée (1a) et en déterminant si la batterie d'alimentation fixée est ou non excessivement déchargée sur la base de la tension limite inférieure de cellule de batterie (VLc) et de la tension entre les bornes mesurée (Vmc) de chaque cellule de batterie (11) ;

   dans lequel le dispositif de charge (2a) est en outre configuré de manière à interdire la charge de ladite une batterie d'alimentation, lorsque ladite une batterie d'alimentation fixée au dispositif de charge est excessivement déchargée.

2. Système selon la revendication 1, **caractérisé en ce que** la mémoire de la batterie d'alimentation fixée (1c) stocke une fréquence de charge (NC).

3. Système selon l'une quelconque des revendications précédentes, **caractérisé en outre par** un capteur de température (15) de la batterie d'alimentation fixée (1d), dans lequel le capteur de température (15) est configuré de manière à mesurer une température de la batterie d'alimentation.

4. Système selon l'une quelconque des revendications 1 à 3, dans lequel la batterie d'alimentation fixée (1a) comprend des bornes de communication (16) couplées à la mémoire (14a) en vue de permettre la lecture et l'écriture des informations de batterie.

5. Système selon la revendication 1, dans lequel la mémoire de la batterie d'alimentation fixée (1a) stocke la tension limite inférieure de bloc de batterie (VLb), dans lequel le dispositif de charge (2a) inclut une unité de mesure de tension (22a) et une unité de commande (25a), l'unité de mesure de tension (22a) est configurée de manière à mesurer une tension entre les bornes (Vmb) du bloc de batterie (10), et l'unité de commande (25a) est configurée de manière à commander la charge selon la tension entre les bornes (Vmb) mesurée par l'unité de mesure de tension (22a), dans lequel l'unité de commande (25a) est configurée de manière à :

lire la tension limite inférieure de bloc de batterie (VLb) à partir de la mémoire (14a) ;

comparer la tension entre les bornes à la tension limite inférieure de bloc de batterie (VLb) ;

permettre la charge lorsque la tension entre les bornes (Vmb) est supérieure à la tension limite inférieure de bloc de batterie (VLb) ; et

interdire la charge lorsque la tension entre les bornes est inférieure ou égale à la tension limite inférieure de bloc de batterie.

6. Système selon la revendication 1, dans lequel la mémoire de la batterie d'alimentation fixée (1b) stocke la tension limite inférieure de cellule de batterie (VLc), dans lequel le dispositif de charge (2b) inclut une unité de mesure de tension (22b) et une unité de commande (25b), dans lequel l'unité de mesure de tension (22b) est configurée de manière à mesurer une tension entre les bornes de chaque cellule de batterie, et l'unité de commande (25b) est configurée de manière à commander la charge selon les tensions entre les bornes des cellules de batterie mesurées par l'unité de mesure de tension (22b), dans lequel l'unité de commande (25b) est configurée de manière à :

lire la tension limite inférieure de cellule de batterie (VLc) à partir de la mémoire (14b) ;

comparer chaque tension entre les bornes (Vmc), laquelle est mesurée par l'unité de mesure de tension (22b), à la tension limite inférieure de cellule de batterie (VLc) ;

permettre la charge lorsque chaque tension entre les bornes est supérieure à la tension limite inférieure de cellule de batterie (VLc) ; et

interdire la charge lorsqu'au moins l'une des tensions entre les bornes est inférieure ou égale à la tension limite inférieure de cellule de batterie (VLc).

7. Système selon la revendication 2, dans lequel la mémoire de la batterie d'alimentation fixée (1c) stocke la tension limite inférieure de bloc de batterie (VLb) et la fréquence de charge (NC), dans lequel le dispositif de charge inclut une unité de mesure de tension (22a) et une unité de commande (25a), dans lequel l'unité de mesure de tension (22a) est configurée de manière à mesurer une tension entre les bornes (Vmb) du bloc de batterie, et l'unité de commande (25a) est configurée de manière à commander la charge selon la tension entre les bornes mesurée par l'unité de mesure de tension (22a), et dans lequel l'unité de commande (25a) est configurée de manière à :

lire la tension limite inférieure de bloc de batterie (VLb) et la fréquence de charge (NC) à partir de la mémoire ;

calculer une tension limite inférieure corrigée en fréquence d'utilisation (VLbc) sur la base de la tension limite inférieure de bloc de batterie (VLb) et de la fréquence de charge (NC) en utilisant une fonction de correction ;

comparer la tension entre les bornes de bloc de batterie (Vmb), laquelle est mesurée par l'unité de mesure de tension (22a), à la tension limite inférieure corrigée en fréquence d'utilisation (VLbc) ;

permettre la charge lorsque la tension entre les bornes est supérieure à la tension limite inférieure corrigée en fréquence d'utilisation ; et

interdire la charge lorsque la tension entre les bornes est inférieure ou égale à la tension limite inférieure corrigée en fréquence d'utilisation.

8. Système selon la revendication 2, dans lequel la mémoire de la batterie d'alimentation fixée stocke la tension limite inférieure de cellule de batterie (VLc) et la fréquence de charge, dans lequel le dispositif de charge inclut une unité de mesure de tension (22b) et une unité de commande (25b), l'unité de mesure de tension (22b) est configurée de manière à mesurer une tension entre les bornes de chaque cellule de batterie, et l'unité de commande (25b) est configurée de manière à commander la charge selon les tensions entre les bornes des cellules de batterie mesurées par l'unité de mesure de tension, et dans lequel l'unité de commande (25b) est configurée de manière à :

lire la tension limite inférieure de cellule de batterie (VLc) et la fréquence de charge à partir de la mémoire ;

calculer une tension limite inférieure corrigée en fréquence d'utilisation sur la base de la tension limite inférieure de cellule de batterie et de la fréquence de charge en utilisant une fonction de correction ;

comparer chaque tension entre les bornes, laquelle est mesurée par l'unité de mesure de tension (22b), à la tension limite inférieure corrigée en fréquence d'utilisation ;

permettre la charge lorsque chaque tension entre les bornes est supérieure à la tension limite inférieure corrigée en fréquence d'utilisation ; et

interdire la charge lorsqu'au moins l'une des tensions entre les bornes est inférieure ou égale à la tension limite inférieure corrigée en fréquence d'utilisation.

9. Système selon la revendication 3, dans lequel la mémoire de la batterie d'alimentation fixée stocke la tension limite inférieure de bloc de batterie (VLb), dans lequel le dispositif de charge inclut une unité de mesure de tension (22d) et une unité de commande (25d), dans lequel l'unité de mesure de tension (22d) est configurée de manière à mesurer une tension entre les bornes (Vmb) du bloc de batterie, et dans lequel l'unité de commande (25d) est configurée de manière à commander la charge selon la tension entre les bornes (Vmb) mesurée par l'unité de mesure de tension (22d) ; et l'unité de commande (25d) est configurée de manière à :

acquérir un signal de température à partir du capteur de température de la batterie d'alimentation en vue d'estimer une température de batterie (TB) ;
lire la tension limite inférieure de bloc de batterie (VLb) à partir de la mémoire ;
calculer une tension limite inférieure corrigée en température sur la base de la tension limite inférieure de bloc de batterie (VLb) et de la température de batterie estimée (TB) en utilisant une fonction de correction ;
comparer la tension entre les bornes, laquelle est mesurée par l'unité de mesure de tension (22d), à la tension limite inférieure corrigée en température ;
permettre la charge lorsque la tension entre les bornes est supérieure à la tension limite inférieure corrigée en température ; et
interdire la charge lorsque la tension entre les bornes est inférieure ou égale à la tension limite inférieure corrigée en température.

10. Système selon la revendication 3, dans lequel la mémoire de la batterie d'alimentation fixée stocke la tension limite inférieure de cellule de batterie (VLc), dans lequel le dispositif de charge inclut une unité de mesure de tension (22b) et une unité de commande (25b et 25d), l'unité de mesure de tension (22b) est configurée de manière à mesurer une tension entre les bornes de chaque cellule de batterie, et l'unité de commande (25b et 25d) est configurée de manière à commander la charge selon les tensions entre les bornes des cellules de batterie mesurées par l'unité de mesure de tension, et dans lequel l'unité de commande est configurée de manière à :

acquérir un signal de température à partir du capteur de température de la batterie d'alimentation en vue d'estimer une température de batterie ;
lire la tension limite inférieure de cellule de batterie (VLc) à partir de la mémoire ;
calculer une tension limite inférieure corrigée en température sur la base de la tension limite inférieure de cellule de batterie (VLc) et de la température de batterie estimée, en utilisant une fonction de correction ;
comparer chaque tension entre les bornes, laquelle est mesurée par l'unité de mesure de tension (22b), à la tension limite inférieure corrigée en température ;
permettre la charge lorsque chaque tension entre les bornes est supérieure à la tension limite inférieure corrigée en température ; et
interdire la charge lorsqu'au moins l'une des tensions entre les bornes est inférieure ou égale à la tension limite inférieure corrigée en température.

11. Système selon les revendications 2 et 3, dans lequel la mémoire de la batterie d'alimentation fixée stocke la tension limite inférieure de bloc de batterie et la fréquence de charge, dans lequel le dispositif de charge inclut une unité de mesure de tension (22d) et une unité de commande (25d), dans lequel l'unité de mesure de tension (22d) est configurée de manière à mesurer une tension entre les bornes du bloc de batterie, et l'unité de commande (25d) est configurée de manière à commander la charge selon la tension entre les bornes mesurée par l'unité de mesure de tension (22), et dans lequel l'unité de commande (25d) est configurée de manière à :

acquérir un signal de température à partir du capteur de température de la batterie d'alimentation en vue d'estimer une température de batterie ;
lire la tension limite inférieure de bloc de batterie (VLb) et la fréquence de charge à partir de la mémoire ;
calculer une tension limite inférieure corrigée en fréquence d'utilisation et en température sur la base de la tension limite inférieure de bloc de batterie, de la température de batterie estimée et de la fréquence de charge, en utilisant une fonction de correction ;
comparer la tension entre les bornes, laquelle est mesurée par l'unité de mesure de tension (22d), à la tension limite inférieure corrigée en fréquence d'utilisation et en température ;
permettre la charge lorsque la tension entre les bornes est supérieure à la tension limite inférieure corrigée en fréquence d'utilisation et en température ; et
interdire la charge lorsque la tension entre les bornes est inférieure ou égale à la tension limite inférieure corrigée en fréquence d'utilisation et en température.

12. Système selon les revendications 2 et 3, dans lequel la mémoire de la batterie d'alimentation fixée stocke la tension limite inférieure de cellule de batterie (VLc) et la fréquence de charge, dans lequel le dispositif de charge inclut une unité de mesure de tension (22b) et une unité de commande (25b et 25d), dans lequel l'unité de mesure de tension (22b) est configurée de manière à mesurer une tension entre les bornes de chaque cellule de batterie, et l'unité de commande (25b et 25d) est configurée de manière à commander la charge selon les tensions entre les bornes des cellules de batterie mesurées par l'unité de mesure de tension (22b) ; et

l'unité de commande (25b et 25d) est configurée de manière à :

acquérir un signal de température à partir du capteur de température de la batterie d'alimentation en vue d'estimer une température de batterie ;

lire la tension limite inférieure de cellule de batterie (VLc) et la fréquence de charge à partir de la mémoire ;

calculer une tension limite inférieure corrigée en fréquence d'utilisation et en température sur la base de la tension limite inférieure de cellule de batterie (VLc), de la température de batterie et de la fréquence de charge en utilisant une fonction de correction ;

comparer chaque tension entre les bornes, laquelle est mesurée par l'unité de mesure de tension (22b), à la tension limite inférieure corrigée en fréquence d'utilisation et en température ;

permettre la charge lorsque chaque tension entre les bornes est supérieure à la tension limite inférieure corrigée en fréquence d'utilisation et en température ; et

interdire la charge lorsqu'au moins l'une des tensions entre les bornes est inférieure ou égale à la tension limite inférieure corrigée en fréquence d'utilisation et en température.

# Fig.1

# Fig.2

Charging Commencement Process

Read lower limit voltage VLb ~S110

Acquire battery block inter-terminal voltage Vmb ~S120

S130

Vmb>VLb?   NO

YES

Permit charging ~S140     Prohibit charging ~S150

END

# Fig.3

# Fig.4

## Fig.5

## Fig.6

# Fig.7

Large
↑
Internal
Resistance
↓
Small

0          500          1000

Charging Frequency NC

# Fig.8

(V)

$VLbc = VLb + \alpha \times NC$

VLbc

VLb

0

0          500          1000

Charging Frequency NC

# Fig.9

```
        ( Charging Commencement Process )
                      │
                      ▼
     ┌──────────────────────────────────┐
     │  Read lower limit voltage VLb     │──S310
     └──────────────────────────────────┘
                      │
                      ▼
     ┌──────────────────────────────────┐
     │  Acquire battery block            │──S320
     │  inter-terminal voltage Vmb       │
     └──────────────────────────────────┘
                      │
                      ▼
     ┌──────────────────────────────────┐
     │  Read charging frequency NC       │──S330
     └──────────────────────────────────┘
                      │
                      ▼
     ┌──────────────────────────────────┐
     │  Calculate usage frequency        │
     │  corrected lower limit voltage VLbc│──S340
     │  based on lower limit voltage VLb  │
     │  and charging frequency NC         │
     └──────────────────────────────────┘
                      │
                      ▼   S350
                  ╱─────────╲          NO
                 ╱  Vmb>VLbc? ╲──────────────┐
                  ╲─────────╱               │
                      │ YES                 │
                      ▼                     ▼
     ┌──────────────────────┐    ┌──────────────────────┐
     │   Permit charging     │──S360│  Prohibit charging  │──S370
     └──────────────────────┘    └──────────────────────┘
                      │                     │
                      ▼◄────────────────────┘
                  (  END  )
```

# Fig.10

## Fig.11

Large

Internal
Resistance

Small

−20          0          25    (℃)

Battery Temperature TB

## Fig.12

(V)

VLbt

VLbt=VLb−β×(TB−T(25℃))

VLb

0

−20          0          25    (℃)

Battery Temperature TB

# Fig.13

```
        ( Charging Commencement Process )
                      │
                      ▼
        ┌──────────────────────────────┐
        │   Read lower limit voltage VLb │ ~S410
        └──────────────────────────────┘
                      │
                      ▼
        ┌──────────────────────────────┐
        │      Acquire battery block     │
        │   inter-terminal voltage Vmb   │ ~S420
        └──────────────────────────────┘
                      │
                      ▼
        ┌──────────────────────────────┐
        │     Acquire temperature signal │
        │  and estimate battery temperature │ ~S430
        └──────────────────────────────┘
                      │
                      ▼
        ┌──────────────────────────────┐
        │  Calculate temperature corrected │
        │      lower limit voltage VLbt    │
        │   based on lower limit voltage VLb │ ~S440
        │    and battery temperature TB    │
        └──────────────────────────────┘
                      │      S450
                      ▼
                  ◇─────────◇      NO
                 ⟨  Vmb>VLbt? ⟩──────────────────────┐
                  ◇─────────◇                         │
                      │ YES                           │
                      ▼                               ▼
        ┌──────────────────────┐       ┌──────────────────────┐
        │     Permit charging    │ ~S460 │    Prohibit charging   │ ~S470
        └──────────────────────┘       └──────────────────────┘
                      │                               │
                      ▼◄──────────────────────────────┘
                  (  END  )
```

**EP 2 779 356 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007143279 A
- US 20090197152 A1
- EP 2568569 A2
- WO 9100623 A2
- US 20120249087 A1